# EUROPÄISCHE PATENTANMELDUNG

(11) **EP 1 775 102 A2**
(43) Veröffentlichungstag der Anmeldung: **18.04.2007**
(21) Anmeldenummer: 06019349.7
(22) Anmeldetag: 15.09.2006
(51) Int. Cl.: B29C 65/08

(54) **Schnellwechseleinrichtung für das schwingende Werkzeug einer Vibrationsschweißmaschine**

(30) Priorität: 14.10.2005 DE 102005049283
(71) Anmelder: Branson Ultraschall Niederlassung der Emerson Technologies GmbH & CO., 63128 Dietzenbach (DE)
(72) Erfinder: Junker, Norbert, 63825 Sommerkahl (DE); Lotz, Wilfried, Dr., 63543 Neuberg (DE)
(74) Vertreter: Hauck Patent- und Rechtsanwälte

(57) **Zusammenfassung**

Beschrieben wird eine Schnellwechseleinrichtung für das am Schwinger einer Vibrationsschweißmaschine anbringbare Werkzeug, das zur Aufnahme der zu verschweißenden schwingenden Werkzeughälfte dient. Die Schnellwechseleinrichtung umfasst mehrere Klemmkörper (26,26a), durch die eine Schwingerplatte (14,14a) des Schwingers und eine Werkzeugplatte (18,18a) des Werkzeuges kraftschlüssig miteinander verbindbar sind. Die Klemmkörper (26,26a) sind am Maschinenrahmen oder am Schwinger verschiebbar gelagert, um zwischen einer Klemm- und Öffnungsstellung zum Schließen bzw. Öffnen der kraftschlüssigen Verbindung verstellt werden zu können. Gemäß einer bevorzugten Ausführungsform bestehen die Stellvorrichtungen aus Schrauben, die sowohl zum Spannen und Lösen der Klemmkörper wie auch zum Sichern der kraftschlüssigen Verbindung dienen.

## Beschreibung

Die vorliegende Erfindung betrifft eine Schnellwechseleinrichtung für das am Schwinger einer Vibrationsschweißmaschine anbringbare Werkzeug zur Aufnahme einer zu verschweißenden Werkstückhälfte.

Zum formschlüssigen Halten der zu verschweißenden Werkstückhälften (Kunststoffteile) hat eine Vibrationsschweißmaschine ein schwingendes Werkzeug (Oberwerkzeug) und ein ruhendes Gegenstück (Unterwerkzeug). Der Wechsel der Werkstücke in der Produktion (z.B. bei einem Armaturenbrett vom Links- zum Rechtslenker) erfordert durch werkstückspezifische Anpassung meist auch den Wechsel der Werkzeuge, welcher zur Zeitersparnis schnell erfolgen sollte.

Während für das ruhende Werkzeug (Unterwerkzeug) einfache und schnelle Wechseleinrichtungen vorhanden sind, erfordert der Wechsel des schwingenden Werkzeuges meist das Lösen vieler Schraubverbindungen. Durch die großen dynamischen Kräfte, die auf den Schwinger wirken (typische Beschleunigungswerte während des Schweißvorganges sind 50 bis 300 g), ist das schwingende Werkzeug durch viele Schrauben kraftschlüssig mit dem Schwinger verbunden. Das Lösen dieser vielen Schraubverbindungen erfordert einen unvergleichbar hohen Zeitaufwand.

Bisherige Lösungen sahen z.B. nur ein Lockern der Schrauben vor. Die Schrauben verblieben im Werkzeug, wodurch die Zeit durch das erneute Einsetzen und Anziehen der Schrauben verkürzt wurde. Eine andere Lösung war das schnelle Lösen der Schrauben mittels Pressluftschrauber oder elektrisch betriebener, autark arbeitender Schraubenschlüssel. Generell blieb jedoch das Grundproblem bestehen: Mechanisches Lösen von Schraubverbindungen und definiertes Anziehen desselben.

Wenngleich es bereits Versuche gab, den Wechsel des schwingenden Werkzeuges durch Automatisieren zu beschleunigen, haben sich diese Versuche in der Praxis bisher nicht bewährt.

Der vorliegenden Erfindung liegt die Aufgabe zugrunde, eine Schnellwechseleinrichtung für das am Schwinger einer Vibrationsschweißmaschine anbringbare Werkzeug zur Aufnahme einer zu verschweißenden Werkstückhälfte zu schaffen, die ein möglichst rasches Lösen und Spannen des Werkzeuges und somit einen raschen Werkzeugwechsel erlaubt.

Die diese Aufgabe lösende Schnellwechseleinrichtung gemäß der vorliegenden Erfindung ist in Anspruch 1 definiert.

Die Schnellwechseleinrichtung umfasst eine Schwingerplatte, die Teil des Schwingers bildet, sowie eine Werkzeugplatte, die Teil des schwingenden Werkzeuges bildet. Ferner umfasst die Schnellwechseleinrichtung mindestens zwei Klemmkörper und zugehörige Stellvorrichtungen. Die Klemmkörper sind an einem stationären oder schwingenden Teil der Vibrationsschweißmaschine beweglich gelagert, und die Stellvorrichtungen sind zwischen einer Klemmstellung und einer Öffnungsstellung verstellbar. In der Klemmstellung stellen die Klemmkörper eine kraftschlüssige Verbindung zwischen der Schwingerplatte und Werkzeugplatte her, während sie in der Öffnungsstellung die kraftschlüssige Verbindung lösen.

Gemäß einer bevorzugten Ausführungsform der Erfindung weisen die Stellvorrichtungen Schrauben auf, die mit Bohrungen des Schwingers in Gewindeeingriff stehen und mit den Klemmkörpern verbunden sind, um bei ihrer Betätigung die Klemmkörper spannen und lösen zu können. Vorzugsweise dienen die Schrauben gleichzeitig zum Sichern der kraftschlüssigen Verbindung zwischen der Schwingerplatte und der Werkzeugplatte durch die Klemmkörper.

Im einfachsten Fall werden die Schrauben manuell (mittels Drehmomentschlüssel) betätigt. Bei einer automatischen Ausführungsform sind zum Betätigen der Schrauben ein oder mehrere Schrauber vorgesehen, die in die Vibrationsschweißmaschine integriert sind. In jedem Fall ist aufgrund der Verwendung der Klemmkörper nur ein begrenzte Anzahl von Schrauben erforderlich, so dass der Wechsel des schwingenden Werkzeuges relativ rasch und unkompliziert durchgeführt werden kann.

Weitere vorteilhafte Ausgestaltungen der Erfindung sind in den Unteransprüchen definiert.

Anhand der Zeichnungen werden Ausführungsbeispiele der Erfindung näher erläutert. Es zeigt:
Fig. 1 eine perspektivische Ansicht eines Teils des Schwingkopfes einer Vibrationsschweißmaschine;
Fig. 2 eine Draufsicht auf den Schwingkopf der Fig. 1 in vergrößertem Maßstab;
Fig. 3 Einzelheiten A, B und C der Fig. 2 in vergrößertem Maßstab;
Fig. 4 einen Schnitt durch eine Hälfte des Schwingkopfes längs der Schnittlinie IV-IV in Fig. 2 in vergrößertem Maßstab;
Fig. 5 einen Schnitt der Schnittlinie V-V in Fig. 2 in vergrößertem Maßstab;
Fig. 6 eine Seitenansicht des Schwingkopfes einer abgewandelten Ausführungsform;
Fig. 7 und 8 Schnittdarstellungen in Blickrichtung der Pfeile VII-VII in Fig. 6 des Klemmbereiches in der Klemm- bzw. Öffnungsstellung in vergrößertem Maßstab;
Fig. 9, 10 perspektivische Darstellungen eines Klemmkörpers von gegenüberliegenden Seiten aus.

Die Zeichnungen zeigen einen Schwingkopf 2 einer im Übrigen nicht dargestellten Vibrationsschweißmaschine, wobei zur Vereinfachung der zeichnerischen Darstellung die Spulen des Schwingkopfes weggelassen sind. Da der nicht dargestellte Teil der Vibrationsschweißmaschine mit Maschinenrahmen, Hubtisch, ruhendem Werkzeug (Unterwerkzeug) zur Aufnahme der ruhenden Werkstückhälfte, usw. von herkömmlicher Bauart sein kann, wird hierauf nicht näher eingegangen.

Der Schwingkopf 2 weist einen stationären Abschnitt in Form einer Brücke 4 auf, die über Schwingungsdämpfer 6 am Maschinenrahmen (nicht gezeigt) gelagert ist. Die Brücke 4 besteht aus einem im Wesentlichen rechteckigen Rahmenteil 8, an dessen beiden Seiten längs verlaufende leistenförmige Rahmenteile 10 angebracht sind.

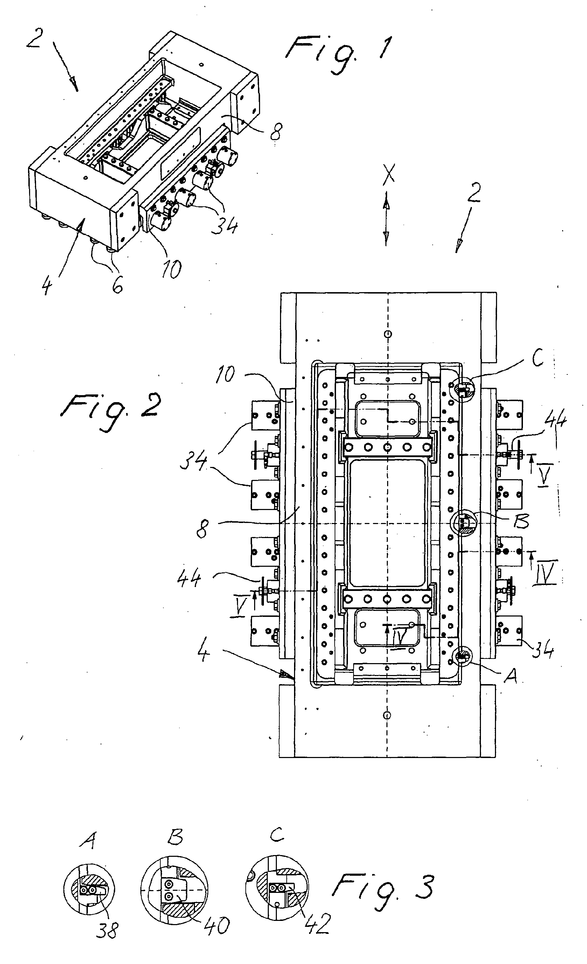

Der Schwingkopf 2 umfasst einen schwingenden Abschnitt in Form eines Schwingers 12, der eine Schwingerplatte 14 aufweist. Der Schwinger 12 und damit die Schwingerplatte 14 sind über Blattfedern 16 an der Brücke 4 so aufgehängt, dass der Schwinger 12 Schwingungen längs einer Schwingungsachse X (siehe Fig. 2) für den Schweißvorgang ausführen kann.

Das am Schwinger 12 befestigbare schwingende Werkzeug (Oberwerkzeug), das zur Aufnahme der zu verschweißenden schwingenden Werkstückhälfte (nicht gezeigt) dient, umfasst eine Werkzeugplatte 18, an der die werkstückspezifische Aufnahme (nicht gezeigt) für die Werkstückhälfte anbringbar ist.

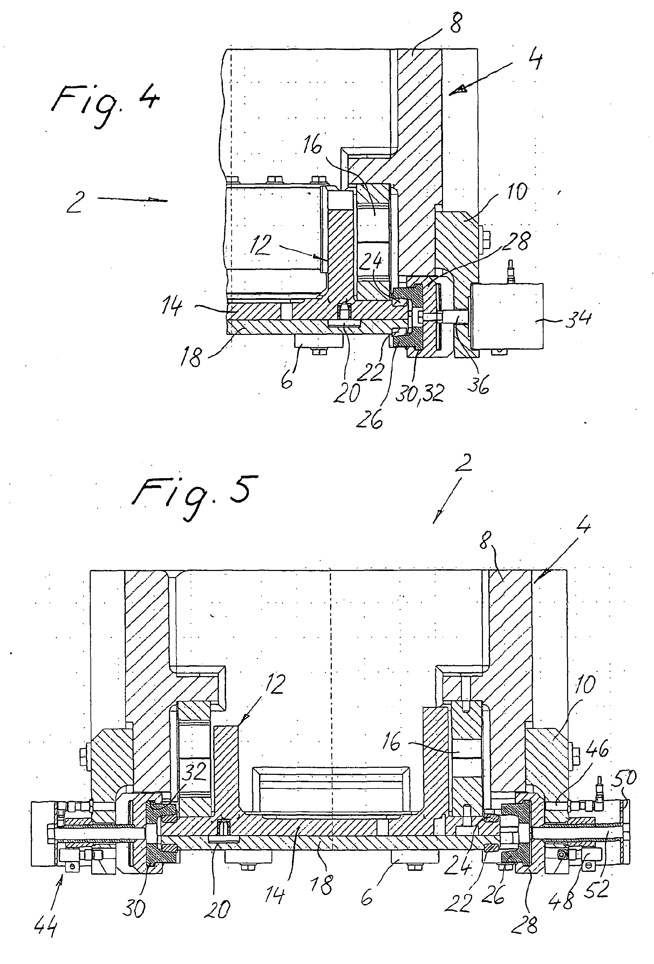

Wie bereits eingangs geschildert, bilden die Schwingerplatte 14 und dieWerkzeugplatte 18 Teil einer Schnellwechseleinrichtung zum raschen Spannen und Lösen des schwingenden Werkzeuges am Schwinger. Die Schwingerplatte 14 und die Werkzeugplatte 18 haben einen im Wesentlichen rechteckigen Umriss (entsprechend der Brücke 4 in den Figuren 1 und 2) und einander zugewandte Anlageflächen, mit denen sie in der in den Figuren 4, 5 gezeigten Stellung flächig aneinander anliegen.

Wie in den Figuren 4, 5 angedeutet, sind Zentrierungen 20 vorgesehen, die die Schwingerplatte 14 und die Werkzeugplatte 18 in vorgegebener Ausrichtung zueinander positionieren.

In der in den Figuren 4 und 5 gezeigten Stellung sind die Schwingerplatte 14 und die Werkzeugplatte 18 durch einen Mechanismus miteinander verspannbar, der im Folgenden beschrieben wird.

Die Schwingerplatte 14 und die Werkzeugplatte 18 sind an ihren seitlichen, parallel zur Schwingungsachse X verlaufenden Längsrändern jeweils mit längs verlaufenden Klemmleisten 22 bzw. 24 versehen, die in entsprechende Ausnehmungen der Schwingerplatte 14 bzw. Werkzeugplatte 18 eingesetzt sind. Die Klemmleisten 22, 24 bestehen aus einem härteren Werkstoff als die Schwingerplatte 14 bzw. Werkzeugplatte 18. Vorzugsweise bestehen die Klemmleisten 22, 24 aus Stahl, während die Schwingerplatte 14 und Werkzeugplatte 18 aus einer Aluminiumlegierung bestehen.

Den Klemmleisten 22 und 24 und somit den Längsrändern der Schwingerplatte 14 und Werkzeugplatte 18 sind längs verlaufende leistenförmige Klemmkörper 26 zugeordnet. Wie in den Figuren 4 und 5 zu sehen ist, haben die Klemmkörper 26 einen Querschnitt ungefähr in Form eines U, dessen beide Schenkel die Längsränder der Schwingerplatte 14 und der Werkzeugplatte 18 und hierbei die Klemmleisten 22, 24 umgreifen können (siehe Fig. 4 und linke Seite der Fig. 5).

Die Klemmleisten 22, 24 haben an ihren voneinander abgewandten Außenseiten Klemmflächen, die mit entsprechenden Klemmflächen an der Innenseite der Schenkel des U der Klemmkörper 26 zusammenwirken. Werden die Klemmkörper 26 seitlich über die Längsränder der Schwingerplatte 14 und der Werkzeugplatte 18 eingefahren, so entsteht eine Klemmverbindung zwischen den Klemmflächen der Klemmkörper 26 und den Klemmleisten 22, 24, wodurch eine kraftschlüssige Verbindung zwischen der Schwingerplatte 14 und der Werkzeugplatte 18 geschaffen wird, wie noch genauer erläutert wird. Die Klemmflächen der Klemmleisten 22, 24 und der Klemmkörper 26 haben einen Neigungswinkel, der kleiner als der Selbsthemmungswinkel der beteiligten Materialien ist, so dass die Klemmverbindung selbsthemmend ist. Der Neigungswinkel ist typischerweise 5° oder weniger und liegt vorzugsweise in der Größenordnung von 2 bis 3°.

An Stelle der dargestellten Ausführungsform könnten die Klemmleisten 22, 24 weggelassen und die entsprechenden Klemmflächen unmittelbar an der Schwingerplatte 14 und der Werkzeugplatte 18 vorgesehen werden, sofern diese Platten aus einem entsprechend harten Material bestehen.

Die Klemmkörper 26 sind in längs verlaufenden, leistenförmigen Halterungen 28 gelagert. Die Halterungen 28 haben einen Querschnitt ungefähr in Form eines U, dessen Schenkel an ihren Innenseite mit längs verlaufenden Nuten 32 versehen sind. Die Klemmkörper 26 sind mit gegenüberliegenden, längs verlaufenden Vorsprüngen 30 versehen, die in den Nuten 32 der Halterungen 28 mit einem vorgegebenen Spiel angeordnet sind.

Die Halterungen 28 sind jeweils mit mehreren Stellvorrichtungen fest verbunden. Aufgrund des vorgegebenen Spiels zwischen den Klemmkörpern 26 und Halterungen 28 sind die Stellvorrichtungen mit den Klemmkörpern 26 jeweils durch eine Totgangverbindung verbunden, deren Zweck noch genauer erläutert wird.

Im dargestellten Ausführungsbeispiel bestehen die Stellvorrichtungen, die an der Brücke 4 festgelegt sind, aus Hydraulikzylindern 34, deren Kolbenstangen 36 durch das Rahmenteil 10 der Brücke 4 verlaufen und an den Halterungen 28 befestigt sind. Die Stellvorrichtungen können jedoch aus anderen Elementen, wie z.B. Motoren bestehen.

Die Hydraulikzylinder 34 sind zwischen zwei Endstellungen verstellbar, und zwar zwischen einer Klemmstellung und einer Öffnungsstellung. In der Klemmstellung drücken die Hydraulikzylinder 34 die Klemmkörper 26 in klemmende Anlage mit den Klemmleisten 22, 24, wodurch die kraftschlüssige Verbindung zwischen der Schwingerplatte 14 und der Werkzeugplatte 18 hergestellt wird (Fig. 4 und linke Seite der Fig. 5). Hierbei ist die resultierende Klemmkraft größer als die zu erwartende Losreißkraft beim Schwingen während des Schweißvorganges. In der Öffnungsstellung haben die Hydraulikzylinder 34 die Klemmkörper 26 von den Klemmleisten 22, 24 so weit entfernt, dass die kraftschlüssige Verbindung zwischen der Schwingerplatte 14 und der Werkzeugplatte 18 gelöst ist (rechte Seite der Fig. 5), so dass die Werkzeugplatte 18 vom Schwingkopf 2 nach unten entfernt werden kann.

Die Hydraulikzylinder 34 sind ferner in eine Zwischenstellung bewegbar, in der sie auf Grund der Totgangverbindung (des Spiels) zwischen den Klemmkörpern 26 und den Halterungen 28 von den Klemmkörpern 26 und damit vom schwingenden System mechanisch getrennt sind. Das Spiel zwischen den Klemmkörpern 26 und den Halterungen 28, das beispielsweise in der Größenordnung von 1 mm liegt, stellt jedoch sicher, dass die Hydraulikzylinder 34 in ihrer Zwischenstellung die Klemmverbindung zwischen den Klemmkörpern 26 und den Klemmleisten 22, 24 nicht lösen. Die Werkzeugplatte 18 bleibt daher mit der Schwingerplatte 14 verspannt, ohne dass die Schwingungen des Schwingers 4 auf die Hydraulikzylinder 34 übertragen werden.

Im dargestellten Ausführungsbeispiel sind auf jeder Seite des Schwingkopfes 2 jeweils vier Stellvorrichtungen (Hydraulikzylinder 34) vorgesehen (siehe Figuren 1, 2). Es versteht sich jedoch, dass die Anzahl der Stellvorrichtungen je nach den Erfordernissen eines speziellen Anwendungsfalles auch anders gewählt werden kann.

Die Klemmkörper 26 und die Halterungen 28 können in Längsrichtung (parallel zur Schwingungsachse X) durchgehend und einstückig ausgebildet werden. Im dargestellten Ausführungsbeispiel sind sie jedoch quer zur Längsrichtung einmal unterteilt (siehe Fig. 2). Sie können jedoch auch mehrfach unterteilt werden, was im Hinblick auf konstruktive Erfordernisse von Vorteil sein kann.

Um die Klemmkörper 26 in Längsrichtung zu fixieren, sind Endanschläge 38, 40, 42 vorgesehen, die in Fig. 2 zu sehen und in Fig. 3 genauer dargestellt sind.

Um die Klemmstellung und Öffnungsstellung der Stellvorrichtungen zu detektieren, sind Sensoren 44 vorgesehen, die im dargestellten Ausführungsbeispiel den Halterungen 28 zugeordnet sind. Zu diesem Zweck sind mit den Halterungen 28 Sensorscheiben 50 über Verbindungsstangen 52 fest verbunden. Die Sensoren 44 umfassen ferner Aufnehmer 46 und 48 in Form von Näherungsschaltern. Die Aufnehmer 46 wirken unmittelbar mit den Halterungen 28 zusammen, um die Öffnungsstellung der Stellvorrichtungen zu erfassen (rechte Seite der Fig. 5). Die Aufnehmer 48 wirken mit den Sensorscheiben 50 zusammen, um die Klemmstellung der Stellvorrichtungen zu erfassen (linke Seite der Fig. 5).

Im Folgenden wird die Funktionsweise der beschriebenen Schnellwechseleinrichtung erläutert.

Es sei angenommen, dass das schwingende Werkzeug am Schwingkopf 2 festgelegt ist, dass also die Werkzeugplatte 18 mit der Schwingerplatte 14 über die Klemmkörper 26 verspannt ist (Fig. 4 und linke Seite der Fig. 5). Um nun das schwingende Werkzeug (Werkzeugplatte 18) auszuwechseln, werden folgende Schritte durchgeführt:
1. Bei ausgeschaltetem Schwingsystem wird der Hubtisch (nicht gezeigt) der Vibrationsschweißmaschine in seine obere Position gefahren, in der das schwingende Werkzeug (Werkzeugplatte 18) von dem ruhenden Werkzeug (nicht gezeigt) abgestützt wird.
2. Die Hydraulikzylinder 34 werden in ihre Öffnungsstellung bewegt, wobei sie über die Halterungen 28 die Klemmkörper 26 mitnehmen, so dass die Klemmverbindung zwischen den Klemmkörpern 26 und den Klemmleisten 22, 24 gelöst wird (rechte Seite der Fig. 5). Die Werkzeugplatte 18 ist daher mit der Schwingerplatte 14 nicht mehr verbunden, so dass das schwingende Werkzeug lose auf dem ruhenden Werkzeug liegt.
3. Der Hubtisch wird nun mit beiden Werkzeugen nach unten in eine Entnahmeposition/Grundposition gefahren.
4. Nachdem das ruhende Werkzeug gelöst wurde, werden beide Werkzeuge entnommen.
5. Ein neues ruhendes Werkzeug und ein neues schwingendes Werkzeug werden in die Vibrationsschwingmaschine eingelegt, und das ruhende Werkzeug wird in herkömmlicher Weise befestigt.
6. Der Hubtisch wird nun mit den beiden neuen Werkzeugen nach oben in seine obere Position gefahren. Die Werkzeugplatte 18 des schwingenden Werkzeuges gelangt dann in Anlage mit der Schwingerplatte 14, wobei die Zentrierungen 20 für eine Positionierung der Werkzeugplatte 18 in vorgegebener Ausrichtung zur Schwingerplatte 14 sorgen.
7. Die Hydraulikzylinder 34 werden nun in die Klemmstellung gefahren, in der sie die Klemmkörper 26 über die Halterungen 28 in klemmende Anlage mit den Klemmleisten 22, 24 drücken. Hierdurch entsteht eine kraftschlüssige Verbindung zwischen der Schwingerplatte 14 und der Werkzeugplatte 18, so dass das schwingende Werkzeug am Schwinger 12 des Schwingkopfes 2 festgelegt ist.
8. Die Hydraulikzylinder 34 werden nun in ihre Zwischenstellung zurückgefahren, in der die Halterungen 28 von den Klemmkörpern 26 mechanisch getrennt sind. Diese mechanische Trennung wird, wie bereits erläutert, durch die Totgangverbindung zwischen den Klemmkörpern 26 und den Halterungen 28 erzielt, genauer gesagt durch das Spiel, mit dem die Vorsprünge 30 der Klemmkörper 26 in den Nuten 32 der Halterungen 28 angeordnet sind. Damit sind die Halterungen 28 und die Hydraulikzylinder 34 von den Klemmkörpem 26 und somit vom schwingenden System entkoppelt, während jedoch die Klemmverbindung zwischen den Klemmkörpern 26 und den Klemmleisten 22, 24 aufgrund der Selbsthemmung erhalten bleibt.
9. Nachdem der Hubtisch wieder in seine Grundposition gefahren wurde, kann der Schweißvorgang durchgeführt werden, bei dem die Schwingerplatte 14 und die an ihm festgelegte Werkzeugplatte 18 die erforderlichen Schwingungen ausführt, ohne dass diese Schwingungen auf die Stellvorrichtungen übertragen werden.

Im dargestellten Ausführungsbeispiel dienen die Hydraulikzylinder 34 sowohl zum Herstellen wie auch Lösen der Klemmverbindung zwischen den Klemmkörpern 26 und den Klemmleisten 22, 24. Die Hydraulikzylinder 34 sind daher als doppelt wirkende Zylinder mit drei Endpositionen ausgebildet. Dies hat den Vorteil eines vergleichsweise geringen Bauaufwandes. Eine andere Möglichkeit besteht darin, zum Herstellen und Lösen der Klemmverbindung getrennte Stellvorrichtungen (Hydraulikzylinder) zu verwenden. Bei dieser Lösung können konstruktiv einfachere Stellvorrichtungen verwendet werden.

Im dargestellten Ausführungsbeispiel sind die aneinander anliegenden Anlageflächen der Schwingerplatte 14 und der Werkzeugplatte 18 eben ausgebildet. Es ist jedoch auch möglich, die Anlageflächen so zu profilieren, dass zusätzlich zu der kraftschlüssigen Verbindung eine formschlüssige Verbindung zwischen der Schwingerplatte 14 und Werkzeugplatte 18 entsteht. Beispielsweise können die Anlageflächen mit in Längsrichtung parallel zur Schwingungsachse X verlaufenden Erhöhungen und Vertiefungen versehen sein.

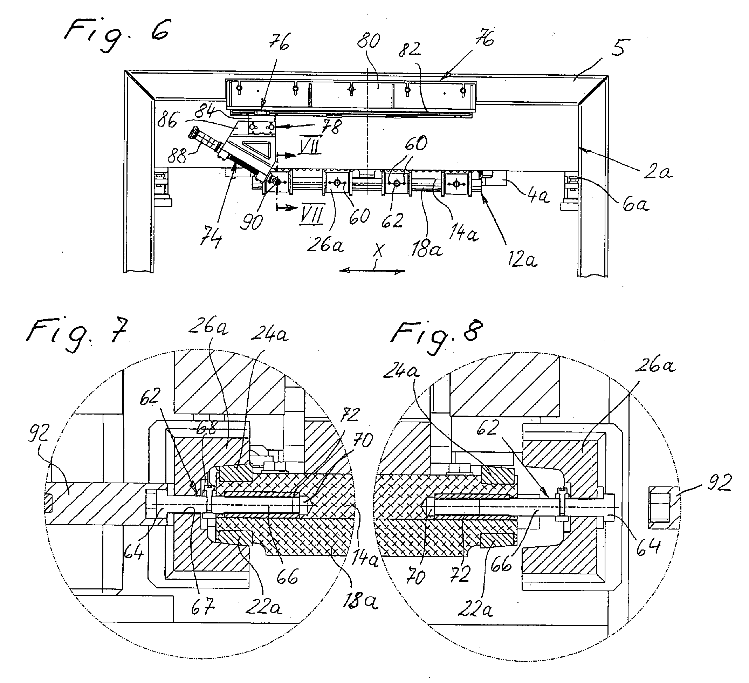

Die Figuren 6 bis 10 zeigen eine abgewandelte Ausführungsform der Schnellwechseleinrichtung. Der vorhergehenden Ausführungsform entsprechende Bauteile wurden mit den gleichen Bezugszeichen unter Hinzufügen des Buchstabens a bezeichnet. So umfasst der Schwingkopf 2a der Ausführungsform der Figuren 6 bis 10 ebenfalls eine Brücke 4a, die über Schwingungsdämpfer 6a am Maschinenrahmen 5 gelagert ist, einen Schwinger 12a mit einer Schwingerplatte 14a sowie eine Werkzeugplatte 18a, an der die werkstückspezifische Aufnahme (nicht gezeigt) für die zu verschweißende schwingende Werkstückhälfte anbringbar ist.

Die Schwingerplatte 14a und die Werkzeugplatte 18a sind wiederum an ihren seitlichen Längsrändern mit Klemmleisten 22a bzw. 24a versehen, die in der gleichen Weise wie bei dem vorhergehenden Ausführungsbeispiel ausgebildet und angeordnet sind. Im dargestellten Ausführungsbeispiel sind die Klemmleisten 22a, 24a an Längsrändern vorgesehen, die parallel zur Schwingungsachse X verlaufen. Stattdessen könnten sie auch senkrecht zur Schwingungsachse X verlaufen. Den Klemmleisten 22a und 24a sind ebenfalls Klemmkörper 26a zugeordnet, welche einen Querschnitt ungefähr in Form eines U haben, dessen beide Schenkel die Längsränder der Schwingerplatte 14a und der Werkzeugplatte 18a und hierbei die Klemmleisten 22a, 24a umgreifen können. Die Klemmflächen der Klemmleisten 22a, 24a und der Klemmkörper 26a sowie die von ihnen gebildete Klemmverbindung sind in der gleichen Weise wie bei dem vorhergehenden Ausführungsbeispiel ausgebildet.

Bei dem Ausführungsbeispiel der Figuren 6 bis 10 sind auf jeder Seite des Schwingers 12a vier Klemmkörper 26a vorgesehen, die seitlich zueinander beabstandet sind (Fig. 6). Während die Klemmkörper bei dem vorhergehenden Ausführungsbeispiel an einem stationären Teil der Vibrationsschweißmaschine (Maschinenrahmen oder Brücke) angebracht sind, sind sie bei dem Ausführungsbeispiel der Figuren 6 bis 10 am Schwinger 12a angebracht. Zu diesem Zweck sind die Klemmkörper 26a mittels Führungsstiften 60 verschiebbar gelagert, die von Bohrungen (nicht gezeigt) der Schwingerplatte 14a aufgenommen werden (Figuren 6, 9, 10). Wie insbesondere in den Figuren 9 und 10 zu sehen ist, ist jeder Klemmkörper 26a mit zwei Führungsstiften 60 versehen, die mit den Klemmkörpern 26a verschraubt sind. Grundsätzlich könnten die Führungsstifte jedoch auch an der Schwingerplatte 14a vorgesehen werden.

Anstelle der Hydraulikzylinder des vorhergehenden Ausführungsbeispiels umfassen die Stellvorrichtungen des Ausführungsbeispiels der Figuren 6 bis 10 Schrauben 62, die zum Spannen und Lösen der Klemmkörper 26a dienen. Die Schrauben 62 bestehen jeweils aus einem Kopf 64 und einem Schaft 66. Der Schaft 66 erstreckt sich jeweils durch eine zentral angeordnete Durchgangsbohrung 67 eines Klemmkörpers 26a und ist mit diesem einerseits durch den Kopf 64 und andererseits durch einen Anschlag 68 so verbunden, dass die Schraube 62 bei einer Axialbewegung den zugehörigen Klemmkörper in beiden axialen Richtungen mitnehmen kann.

Der mit Gewinde versehene Teil des Schaftes 66 der Schraube 62 ist in eine entsprechende Bohrung 70 der Schwingerplatte 14a eingelassen. Genauer gesagt, steht das Gewinde des Schaftes 66 mit dem Gewinde einer Gewindebuchse 72 in Eingriff, die innerhalb der Bohrung 70 angeordnet ist. Die Schraube 62 ist somit durch eine Schraubbewegung relativ zur Bohrung 70 axial bewegbar, um den zugehörigen Klemmkörper zwischen seiner Klemm- und Öffnungsstellung verstellen zu können.

Zum Betätigen der Schrauben 62 dienen Schrauber 74, die in die Vibrationsschweißmaschine integriert sind. Bei dem dargestellten Ausführungsbeispiel sind den Schrauben 62 der vier Klemmkörper 26a auf den gegenüberliegenden Seiten des Schwingkopfes 2a jeweils ein Schrauber 74 zugeordnet, der mittels zweier Linearführungen 76 und 78 (Fig. 6) zum Spannen und Lösen jeder der Schrauben 62 auf der zugehörigen Seite des Schwingkopfes 2a eingesetzt werden kann.

Die Linearführung 76 verläuft parallel zur Schwingungsachse X und dient zum Verschieben des Schraubers 74 längs einer ersten Verfahrachse, um die Positionen der vier Klemmkörper 26a und ihrer zugehörigen Schrauben 62 anfahren zu können. Die Linearführung 76 wird von einer am Maschinenrahmen 5 befestigten Halterung 80 mit einer Schiene 82 gebildet, an der ein Trägerteil 84 gleitend geführt ist.

Die Linearführung 78 verläuft rechtwinklig zur Linearführung 76, um den Schrauber 74 längs einer Verfahrachse verfahren zu können, die parallel zu den Achsen der Schrauben 62 verläuft. Aufgrund der Linearführung 78 kann daher der Schrauber 74 der Axialbewegung einer Schraube 62 beim Spannen und Lösen folgen. Die Linearführung 78 ist zwischen dem Trägerteil 84 der Linearführung 76 und einem Trägerteil 86 gebildet, an dem der Schrauber 74 befestigt ist.

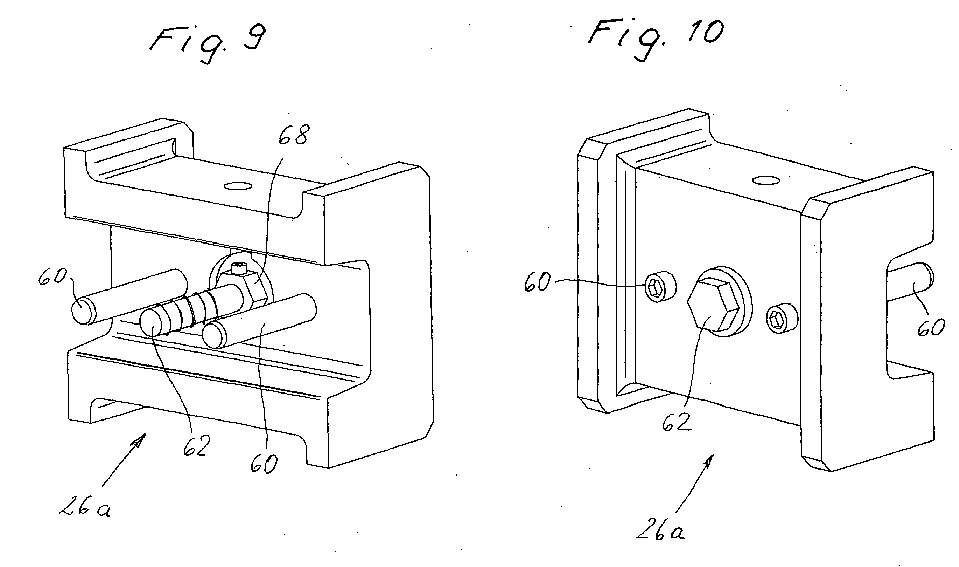

Als Schrauber 74 kann ein herkömmlicher steuerbarer Schrauber verwendet werden, sofern er die geforderte Genauigkeit und das benötigte Drehmoment erbringen kann. Wie schematisch angedeutet, ist der Schrauber 74 mit einem Antrieb 88 versehen, der elektrisch, pneumatisch, hydraulisch oder auf andere geeignete Weise ausgebildet ist. Der Schrauber 74 ist ferner mit einem Winkelstück 90 versehen, so dass ein am Winkelstück 90 vorgesehener Steckschlüssel 92 (Figuren 7, 8) den Kopf 64 einer zugehörigen Schraube 62 erfassen zu können. Der Schrauber 74 kann somit in einer Lage angeordnet werden, in der seine Hauptachse senkrecht zu den Schraubenachsen verläuft.

Die Linearführungen 76 und 78 sind jeweils mit einem Antrieb (nicht gezeigt) zum Verstellen des Schraubers 74 längs der entsprechenden Verfahrachse versehen. Die Antriebe können in herkömmlicher Weise elektrisch, pneumatisch, hydraulisch oder auch auf andere Weise betätigbar sein.

Es wird nun die Funktionsweise der Schnellwechseleinrichtung des Ausführungsbeispiels der Figuren 6 bis 10 beschrieben:

Um die Klemmverbindung zwischen der Schwingerplatte 14a und der Werkzeugplatte 18a herzustellen, werden die Schrauben 62 mit Hilfe der Schrauber 74 angezogen. Zu diesem Zweck werden zunächst die beiden auf gegenüberliegenden Seiten angeordneten Schrauber 74 mit Hilfe der Linearführungen 76 jeweils in eine Position gefahren, in der der Steckschlüssel 92 des zugehörigen Schraubers 74 mit der Achse der zu betätigenden Schraube 62 fluchtet. Mit Hilfe der Linearführung 78 wird dann der Schrauber 74 rechtwinklig zur Verfahrachse der Linearführung 76 so verfahren, dass der Steckschlüssel 92 den Kopf 64 der zugehörigen Schraube 62 aufnimmt. Der Schrauber 74 wird nun betätigt, um die Schraube in die Bohrung 70 der Schwingerplatte 14a tiefer einzuschrauben. Hierbei nimmt die Schraube 62 den zugehörigen Klemmkörper 26a mit, so dass die Klemmflächen des Klemmkörpers 26a mit den Klemmflächen der Klemmleisten 22a, 24a in Anlage gelangen.

Auf diese Weise werden auch die anderen Schrauben 62 angezogen. Es entsteht dann in der gleichen Weise wie bei dem vorhergehenden Ausführungsbeispiel eine Klemmverbindung zwischen der Schwingerplatte 14a und der Werkzeugplatte 18a, die ebenfalls selbsthemmend ist. Die Schrauben 62 dienen hierbei als zusätzliche Sicherung, die ein unbeabsichtigtes Lösen der Klemmverbindung durch ungewünschte oder undefinierte Belastungen (zum Beispiel Stoßbelastungen) verhindern. Fig. 7 zeigt die Klemmverbindung im geschlossenen Zustand.

Zum Lösen der Klemmverbindung wird in umgekehrter Reihenfolge vorgegangen. Nachdem der Schrauber 74 über die Linearführung 76 und 78 eine zu lösende Schraube 62 angefahren hat, wird die betreffende Schraube 62 vom Schrauber 74 aus der Bohrung 70 wieder herausgedreht. Hierbei nimmt die Schraube 62 den zugehörigen Klemmkörper 26a über den Anschlag 68 mit. Dabei wird der Klemmkörper 26 soweit bewegt, dass die Werkzeugplatte 18a von der Schwingerplatte 14a gelöst werden kann, wie dies anhand des vorhergehenden Ausführungsbeispiels beschrieben wurde. Der Klemmkörper 26a wird von den Führungsstiften 60 und der Schraube 62 an der Schwingerplatte 14a gehalten.

Wenn der Schrauber 74 alle Klemmkörper 26a auf diese Weise gelöst hat, wird der Steckschlüssel 92 - mit Hilfe der Linearführung 78 - von dem Schraubenkopf 64 gelöst, damit der Schrauber 74 vom Schwinger 12a entkoppelt ist. Dieser Zustand ist in Fig. 8 dargestellt. Während des Vibrationsschweißvorgangs, das heißt während der Schwingung des Schwingers 12a, ist der Steckschlüssel 92 immer von den Schrauben 62 gelöst und damit schwingungstechnisch entkoppelt. Wie Fig. 6 zeigt, sind die Schrauber 74 über die Linearführungen 76 und 78 am Maschinenrahmen 5 angebracht. Ebenso wäre eine Montage an der schwingungsmäßig gering belasteten Brücke 4a möglich.

Wie bereits erwähnt, sind bei dem dargestellten Ausführungsbeispiel zwei Schrauber 74 vorgesehen, die auf gegenüberliegenden Seiten des Schwingkopfes 2a jeweils vier 26a zugeordnet sind.

Es ist jedoch auch eine andere Ausführungsform (nicht gezeigt) möglich, bei der für jede Schraube 62 ein eigener Schrauber vorgesehen ist. Die Linearführung 76 zum Anfahren der verschiedenen Schrauben würde dann entfallen. Bei dem hier dargestellten Ausführungsbeispiel wären dann acht Schrauber erforderlich, denen jeweils eine Linearführung 78 zum Verstellen des Schraubers 74 parallel zu den Schraubenachsen zugeordnet wären. Dem Nachteil höherer Kosten stünde der Vorteil des Zeitgewinns gegenüber, da alle Schrauben und somit alle Klemmkörper gleichzeitig gespannt und gelöst werden könnten.

Bei einer weiteren nicht dargestellten Ausführungsform kann auf Schrauber und Linearführungen ganz verzichtet werden. In diesem Fall werden die Schrauben 62 manuell mittels eines Drehmomentschlüssels angezogen und gelöst. Da auch bei dieser Ausführungsform wegen der Verwendung der Klemmkörper nur relativ wenig Schrauben betätigt werden müssen, lässt sich die Klemmverbindung zwischen der Schwingerplatte 14a und der Werkzeugplatte 18a vergleichsweise rasch öffnen und schließen, so dass sich auch bei dieser Lösung - trotz minimaler Herstellungskosten - eine beträchtliche Zeitersparnis ergibt. Somit hat auch diese manuelle Schnellwechseleinrichtung durchaus ihre Vorzüge im Vergleich zu den vorstehend erläuterten vollautomatisierbaren Schnellwechseleinrichtungen.

## Patentansprüche

1. Schnellwechseleinrichtung für das am Schwinger einer Vibrationsschweißmaschine anbringbare Werkzeug zur Aufnahme einer zu verschweißenden Werkstückhälfte, mit
einer Schwingerplatte (14; 14a), die Teil des Schwingers (12; 12a) bildet und über Federn (16) an der Brücke (4; 4a) des Schwingkopfes (2; 2a) aufgehängt ist, um Schwingungen längs einer vorgegebenen Schwingungsachse (X) ausführen zu können,
einer Werkzeugplatte (18; 18a), die Teil des Werkzeuges bildet,
mindestens zwei Klemmkörpern (26; 26a), die an der Vibrationsmaschine beweglich gelagert sind, und
Stellvorrichtungen (34, 36; 62, 74) zum Verstellen der Klemmkörper,
wobei die Stellvorrichtungen verstellbar sind zwischen einer Klemmstellung, in der die Klemmkörper (26; 26a) eine kraftschlüssige Verbindung zwischen der Schwingerplatte (14; 14a) und der Werkzeugplatte (18; 18a) herstellen, und einer Öffnungsstellung, in der die Klemmkörper die kraftschlüssige Verbindung lösen.

2. Schnellwechseleinrichtung nach Anspruch 1, **dadurch gekennzeichnet, dass** die kraftschlüssige Verbindung zwischen der Schwingerplatte (14) und der Werkzeugplatte (18; 18a) selbsthemmend ausgebildet ist.

3. Schnellwechseleinrichtung nach einem der vorhergehenden Ansprüche, **dadurch gekennzeichnet, dass** die mindestens zwei Klemmkörper (26; 26a) an gegenüberliegenden, parallel zur Schwingungsachse (X) verlaufenden Längsrändern der Schwingerplatte (14; 14a) und Werkzeugplatte (18; 18a) angreifen.

4. Schnellwechseleinrichtung nach Anspruch 3, **dadurch gekennzeichnet, dass** die Klemmkörper (26; 26a) einen Querschnitt ungefähr in Form eines U haben, dessen Schenkel in der Klemmstellung die Längsränder der Schwingerplatte (14; 14a) und Werkzeugplatte (18; 18a) umgreifen.

5. Schnellwechseleinrichtung nach Anspruch 4, **dadurch gekennzeichnet, dass** die Klemmkörper (26; 26a) an den Innenseiten der Schenkel des U Klemmflächen und die Schwingerplatte (14; 14a) sowie die Werkzeugplatte (18; 18a) im Bereich ihrer Längsränder entsprechende Klemmflächen haben, die unter einem vorgegebenen Neigungswinkel geneigt sind und zum Herstellen der kraftschlüssigen Verbindung zwischen der Schwinger- und Werkzeugplatte zusammenwirken.

6. Schnellwechseleinrichtung nach Anspruch 5, **dadurch gekennzeichnet, dass** der Neigungswinkel der Klemmflächen kleiner als der Selbsthemmungswinkel der beteiligten Werkstoffe ist.

7. Schnellwechseleinrichtung nach Anspruch 5 oder 6, **dadurch gekennzeichnet, dass** die Klemmflächen der Schwingerplatte (14; 14a) und Werkzeugplatte (18; 18a) an Klemmleisten (22, 24; 22a, 24a) vorgesehen sind, die in die Schwinger- und Werkzeugplatte eingesetzt sind und deren Werkstoff härter als der Werkstoff der Schwinger- und Werkzeugplatte ist.

8. Schnellwechseleinrichtung nach einem der vorhergehenden Ansprüche, **dadurch gekennzeichnet, dass** die Klemmkörper (26a) am Schwinger (12a) verschiebbar gelagert sind.

9. Schnellwechseleinrichtung nach Anspruch 8, **dadurch gekennzeichnet, dass** zur verschiebbaren Lagerung der Klemmkörper (26a) am Schwinger (12a) Führungsstifte (60) dienen.

10. Schnellwechseleinrichtung nach Anspruch 8 oder 9, **dadurch gekennzeichnet, dass** die Stellvorrichtungen Schrauben (62) aufweisen, die mit Bohrungen (70) des Schwingers (12a) in Gewindeeingriff stehen und mit den Klemmkörpern (26a) verbunden sind, um bei ihrer Betätigung die Klemmkörper (26a) zu spannen und zu lösen.

11. Schnellwechseleinrichtung nach Anspruch 10, **dadurch gekennzeichnet, dass** die Schrauben (62) zum Sichern der kraftschlüssigen Verbindung zwischen der Schwingerplatte (14a) und der Werkzeugplatte (18a) durch die Klemmkörper (26a) dienen.

12. Schnellwechseleinrichtung nach Anspruch 10 oder 11, **dadurch gekennzeichnet, dass** die Schrauben (62) manuell betätigbar sind.

13. Schnellwechseleinrichtung nach Anspruch 10 oder 11, **dadurch gekennzeichnet, dass** zum Betätigen der Schrauben (62) mindestens ein Schrauber (74) vorgesehen ist, der an der am Maschinenrahmen (5) elastisch abgestützten Brücke (4a) oder unmittelbar am Maschinenrahmen (5) gelagert ist.

14. Schnellwechseleinrichtung nach Anspruch 13, **dadurch gekennzeichnet, dass** der Schrauber (74) einen Steckschlüssel (92) zum Erfassen des Kopfes (64) der Schraube (62) aufweist.

15. Schnellwechseleinrichtung nach Anspruch 13 oder 14, **dadurch gekennzeichnet, dass** zur Lagerung des Schraubers (74) eine Linearführung (78) vorgesehen ist, durch die der Schrauber (74) einer Linearbewegung der Schraube (62) beim Anziehen und Lösen folgen kann.

16. Schnellwechseleinrichtung nach einem der Ansprüche 13 bis 15, **dadurch gekennzeichnet, dass** für jede Schraube (62) ein eigener Schrauber (74) vorgesehen ist.

17. Schnellwechseleinrichtung nach einem der Ansprüche 13 bis 15, **dadurch gekennzeichnet, dass** an den beiden Seiten des Schwingers (12), denen die Klemmkörper (26a) zugeordnet sind, je ein Schrauber (74) vorgesehen ist, der mittels einer Linearführung (76) zu den auf der betreffenden Seite vorgesehenen Schrauben (62) verfahrbar ist.

18. Schnellwechseleinrichtung nach einem der vorhergehenden Ansprüche, **dadurch gekennzeichnet, dass** die Klemmkörper sich im Wesentlichen über die gesamte Länge der Schwingerplatte (14) und Werkzeugplatte (18) parallel zur Schwingungsachse (X) erstrecken.

19. Schnellwechseleinrichtung nach einem der vorhergehenden Ansprüche, **dadurch gekennzeichnet, dass** die Klemmkörper (26; 26a) quer zur Längsrichtung mindestens einmal unterteilt sind.

20. Schnellwechseleinrichtung nach einem der vorhergehenden Ansprüche, **dadurch gekennzeichnet, dass** die Schwingerplatte (14; 14a) und die Werkzeugplatte (18; 18a) in der Klemmstellung flächig aneinander anliegen.

21. Schnellwechseleinrichtung nach Anspruch 18, **dadurch gekennzeichnet, dass** die Schwingerplatte (14; 14a) und die Werkzeugplatte (18; 18a) durch Zentrierungen (20) in vorgegebener Ausrichtung zueinander positionierbar sind.

22. Schnellwechseleinrichtung nach einem der vorhergehenden Ansprüche, **dadurch gekennzeichnet, dass** die aneinander anliegenden Flächen der Schwingerplatte und Werkzeugplatte so profiliert sind, dass zusätzlich zu der Kraftschlussverbindung eine Formschlussverbindung zwischen ihnen vorhanden ist.

23. Schnellwechseleinrichtung nach einem der vorhergehenden Ansprüche, **dadurch gekennzeichnet, dass** Sensoren (44) zum Erfassen der Klemm- und Öffnungsstellung der Stellvorrichtungen vorgesehen sind.
